# EUROPEAN PATENT SPECIFICATION

(11) **EP 4 180 760 B1**
(45) Date of publication and mention of the grant of the patent: **01.07.2026**
(21) Application number: 21909475.2
(22) Date of filing: 22.12.2021
(51) Int. Cl.: G01B 11/00, G01C 15/00, G01S 7/481, G01S 17/66

(54) **COORDINATE MEASURING INSTRUMENT**
KOORDINATENMESSGERÄT
INSTRUMENT DE MESURE DE COORDONNÉES

(30) Priority: 25.12.2020 CN 202011566649; 23.07.2021 CN 202110839682
(43) Date of publication of application: 17.05.2023
(73) Proprietor: Chotest Technology Inc., Shenzhen, Guangdong 518071 (CN)
(72) Inventor: ZHANG, Hejun, Shenzhen, Guangdong 518071 (CN); CHEN, Yuan, Shenzhen, Guangdong 518071 (CN); LIAO, Xuewen, Shenzhen, Guangdong 518071 (CN); ZHANG, Zhiwei, Shenzhen, Guangdong 518071 (CN); FENG, Furong, Shenzhen, Guangdong 518071 (CN); ZHANG, Hujie, Shenzhen, Guangdong 518071 (CN)
(74) Representative: Isern Patentes y Marcas S.L.
(86) International application number: PCT/CN2021/140500
(87) International publication number: WO 2022/135480

(56) References cited:
- CN-A- 104 011 503
- CN-A- 105 352 436
- CN-A- 105 699 983
- CN-A- 112 556 579
- CN-A- 113 340 205
- US-A1- 2015 002 857
- US-A1- 2015 015 700
- US-A1- 2016 033 258
- US-A1- 2017 167 845

## Description

In the fields of precision industry and measurement, when assembling a large machine, people often need to test an assembled target object by means of a precision instrument so as to improve the accuracy of assembly; meanwhile, after assembled, the machine also needs to be calibrated; and in the assembly process, in addition to measuring the three-dimensional coordinates of the target object or a certain target point on the target object, it is also needed to measure the movement of the target object or the target point, i.e. the orientation of the target object or the target point, and therefore, a coordinate measuring instrument capable of accomplishing measurement with six degrees of freedom on the basis of the three-dimensional coordinates is needed. Thus, a measurement manner for measuring the orientation of the target object or the target point by means of a coordinate measuring instrument emerges.

When the coordinate measuring instrument is used to measure the three-dimensional coordinate of the relevant position of the target, the spatial angle and distance of the target are measured by configuring two rotating axes in the coordinate measuring instrument and combining with the laser ranging unit. The orientation angle of the target is measured by using the orientation camera and auxiliary measuring devices such as handheld accessories. Thus, the measurement of six degrees of freedom of the target can be achieved.

At present, for a coordinate measuring instrument for measuring a distance by using a method of combining absolute distance measurement and relative distance measurement, an absolute distance measuring unit and an interferometric distance measuring unit are generally provided on two sides of the outside of an optical body, however, this installation manner may bring drawbacks such as carrying on difficulty, wiring complexity and large space occupation. US2016/1133258A1 discloses a coordinate measuring device, including a laser tracker, for capturing the position and alignment of a measuring aid, which is movable in space and comprises a retroreflector. US2015/0002857A1 discloses a laser-based measuring apparatus for measuring a position of a distant target. US2017/0167845A1 discloses a laser tracker for progressive tracking of a reflective target and for determining the distance to the target having a distance measuring unit.

At present, for a coordinate measuring instrument for measuring a distance by using a method of combining absolute distance measurement and relative distance measurement, an absolute distance measuring unit and an interferometric distance measuring unit are generally provided on two sides of the outside of an optical body, however, this installation manner may bring drawbacks such as carrying on difficulty, wiring complexity and large space occupation.

### SUMMARY OF INVENTION

The present invention has been proposed in view of the above-mentioned situation in the prior art, and an object thereof is to provide a coordinate measuring instrument having an optical body and capable of measuring coordinates and orientations of an auxiliary measuring device by tracking.

For this purpose, the present invention provides a coordinate measuring instrument as provided in claim 1 which measures an auxiliary measuring device by tracking the auxiliary measuring device. The coordinate measuring instrument includes: a base and an optical mechanism disposed on the base, the optical mechanism includes a first rotating device mounted on the base and rotatable relative to the base around a first axis, a second rotating device having a second axis and disposed on the first rotating device, and an optical body mounted on the second rotating device and rotatable relative to the first rotating device around the second axis, and the first axis is orthogonal to the second axis; the optical body has a housing, a laser source disposed in the housing and emitting a laser beam, a beam tracker for capturing the laser beam reflected by the auxiliary measuring device to track the laser beam, and an optical distance meter for measuring a distance from the auxiliary measuring device; the housing includes a first housing, a second housing, and a functional housing disposed between the first housing and the second housing; and the optical distance meter includes an interferometric distance measuring unit and an absolute distance measuring unit which are disposed inside the optical body.

In the coordinate measuring instrument according to the present invention, the optical body is disposed between a first supporting portion and a second supporting portion, an orientation camera and an optical distance meter are disposed on the optical body, an absolute distance measuring unit and an interferometric distance measuring unit are disposed in the housing on the optical body, and a variation angle of a beam passing through the supporting portion, the absolute distance measuring unit and the interferometric distance measuring unit is measured by an angle encoder disposed on the second rotating device. Thus, the distance and the variation angle of the auxiliary measuring device can be measured, and then, the coordinates of the position and the orientation of the auxiliary measuring device can be measured. Meanwhile, with respect to the case that the absolute distance measuring unit and the interferometric distance measuring unit are disposed on two sides of the outside of the optical body, the volume of the first supporting portion or the second supporting portion can be reduced, the issues such as carrying on difficulty, wiring complexity and large space occupation due to the larger volume of the first supporting portion or the second supporting portion can be solved, and meanwhile, the inner space of the optical body can be fully utilized.

Further, in the coordinate measuring instrument according to the present invention, optionally, the first rotating device has a groove, the first rotating device has a first rotating shaft capable of rotating along the first axis disposed in a vertical direction and a rotating body mounted on the base via the first rotating shaft. In this case, the coordinate measuring instrument is capable of rotating with the rotating body around the first axis based on the rotating body. Thus, the coordinate measuring instrument may complete measurement in a plane perpendicular to a vertical axis.

Further, in the coordinate measuring instrument according to the present invention, optionally, the second rotating device includes a first supporting portion, a second supporting portion, a second rotating shaft rotatably disposed between the first supporting portion and the second supporting portion, and a grip portion. In this case, when the coordinate measuring instrument is used, the coordinate measuring instrument can be carried by the grip portion to adapt to a scene in which the coordinate measuring instrument needs to be carried.

Further, in the coordinate measuring instrument according to the present invention, optionally, the optical body also includes an orientation camera configured to rotate with the second rotating shaft around the second axis. In this case, the movement state of the auxiliary measuring device can be obtained through the orientation camera with photographing the coordinate measuring instrument.

Further, in the coordinate measuring instrument according to the present invention, optionally, a control mechanism for driving the optical body to rotate is also included. In this case, the movement of the optical body can be driven by the control mechanism so that the orientation camera and the optical distance meter track the auxiliary measuring device.

Further, in the coordinate measuring instrument according to the present invention, optionally, the first housing and the functional housing are connected by a connecting column, the second housing and the functional housing are connected by a connecting column, and the housing is a sealed structure. In this case, the structural stability of each housing part of the housing is enhanced. Further, the housing is capable of protecting the components therein. Thus, adverse effects of airborne dust on optical devices inside the housing can be reduced, for example, the efficiency of optical-to-electrical signal conversion is reduced.

Further, in the coordinate measuring instrument according to the present invention, optionally, the second rotating device includes a first bearing disposed on the first supporting portion and a second bearing disposed on the second supporting portion, the second rotating shaft is mounted on the second rotating device via the first bearing and the second bearing, and an angle encoder with a circular ring shape is disposed on a side close to the first supporting portion of the first bearing or on a side close to the second supporting portion of the second bearing. In this case, the rotating shafts can be fixedly supported by the first bearing and the second bearing. In addition, in this case, beam angles emitted from the laser can be measured by the angle encoder.

Further, in the coordinate measuring instrument according to the present invention, optionally, the second rotating shaft has a first through hole in the direction of the second axis and a second through hole formed in a side wall of the second rotating shaft and communicating with the first through hole, and the second rotating shaft communicates with the second rotating device and the optical body via the first through hole and the second through hole. In this case, the second rotating device and devices on the optical body can be connected by connecting lines such as electric wires via the through holes.

Further, in the coordinate measuring instrument according to the present invention, optionally, the optical mechanism has an optical fiber unit disposed inside the second rotating device and the optical body respectively via the first through hole and the second through hole, one end of the optical fiber unit enters the second rotating device via the first through hole, and the other end of the optical fiber unit enters the optical body via the second through hole. In this case, the optical fiber can enter the second rotating unit and the optical body via the first through hole and the second through hole respectively. Thus, the space accumulation design of lines inside the optical mechanism can be reduced, and the space utilization ratio can be increased.

Further, in the coordinate measuring instrument according to the present invention, optionally, the second rotating device includes an optical fiber supporting portion for supporting the optical fiber unit. Thus, the optical fiber unit can be fixed by the optical fiber supporting portion.

According to the present invention, a coordinate measuring instrument having an optical body and capable of measuring coordinates and an orientation of an auxiliary measuring device by tracking can be provided.

### BRIEF DESCRIPTION OF THE DRAWINGS

Embodiments of the present invention will now be explained in further detail, by way of examples only, with reference to the accompanying drawings, in which:
Fig. 1 is a schematic view showing an application of a coordinate measuring instrument according to an embodiment of the present invention;
Fig. 2 is an overall structural view showing a coordinate measuring instrument according to an embodiment of the present invention;
Fig. 3 is a schematic view showing an optical body of a coordinate measuring instrument according to an embodiment of the present invention;
Fig. 4 is an internal structural view showing an optical body of a coordinate measuring instrument according to an embodiment of the present invention;
Figs. 5a and 5b are schematic views showing the mutual cooperation of an orientation camera and an optical distance meter according to embodiments of the present invention; and
Fig. 6 is a layout view showing an optical fiber unit of a coordinate measuring instrument according to an embodiment of the present invention.

### DETAILED DESCRIPTION

Hereinafter, preferred embodiments of the present invention will be described in detail with reference to the accompanying drawings. In the following descriptions, the same component is given the same reference numeral, and repeated descriptions are omitted. Further, the accompanying drawings are merely schematic, and proportions of dimensions of components relative to one another, or the shapes of the components, etc. may differ from the reality.

It should be noted that the terms "include" and "have", and any variations thereof in this disclosure, such as a process, method, system, product, or equipment that includes or has a list of steps or elements are not necessarily limited to those explicitly recited steps or elements, but may include or have other steps or elements not explicitly recited or inherent to such process, method, product, or equipment.

Further, the subtitles, etc. referred to the following descriptions of the present invention are not intended to limit the content or scope of the present invention, but merely to serve as a reminder of reading. Such subtitles are neither understood to be used to segment the content of the article, nor should contents under the subtitles be limited only within the scopes of the subtitles.

The present embodiment relates to a coordinate measuring instrument which is a coordinate measuring instrument for tracking an auxiliary measuring device and measuring spatial coordinates and an orientation of the auxiliary measuring device. The "coordinate measuring instrument" may also be referred to as a "coordinate measuring device", and the "auxiliary measuring device" may also be referred to as an "orientation target ball", "orientation target", "target" or "target ball". By using the coordinate measuring instrument according to the present embodiment, the target ball can be tracked, and then, the spatial coordinates and orientation of the target ball can be measured.

Hereinafter, the coordinate measuring instrument according to the present embodiment will be described in detail with reference to the accompanying drawings.

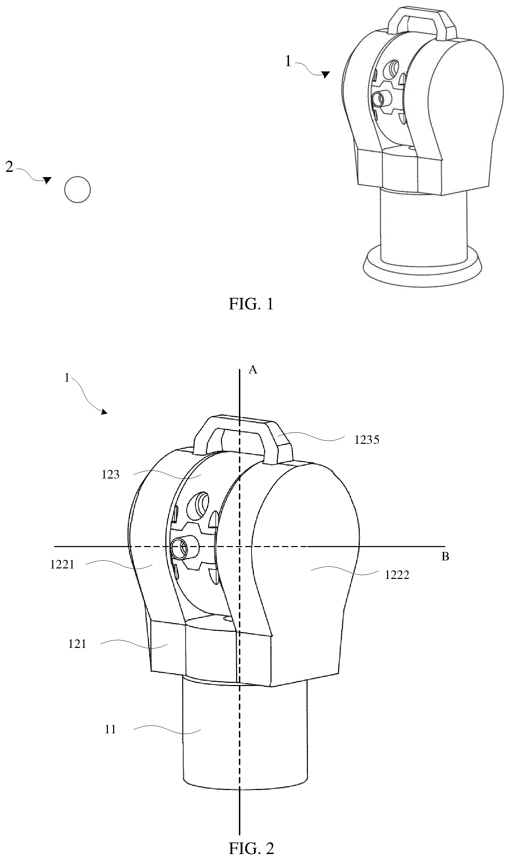

Fig. 1 is a schematic view showing an application of a coordinate measuring instrument 1 according to an embodiment of the present invention. As shown in Fig. 1, in the present embodiment, a target ball 2 may be tracked by the coordinate measuring instrument 1, and when the target ball 2 moves, the coordinate measuring instrument 1 is capable of rotatably following the target ball 2, thereby capturing the spatial coordinates and orientation of the target ball 2.

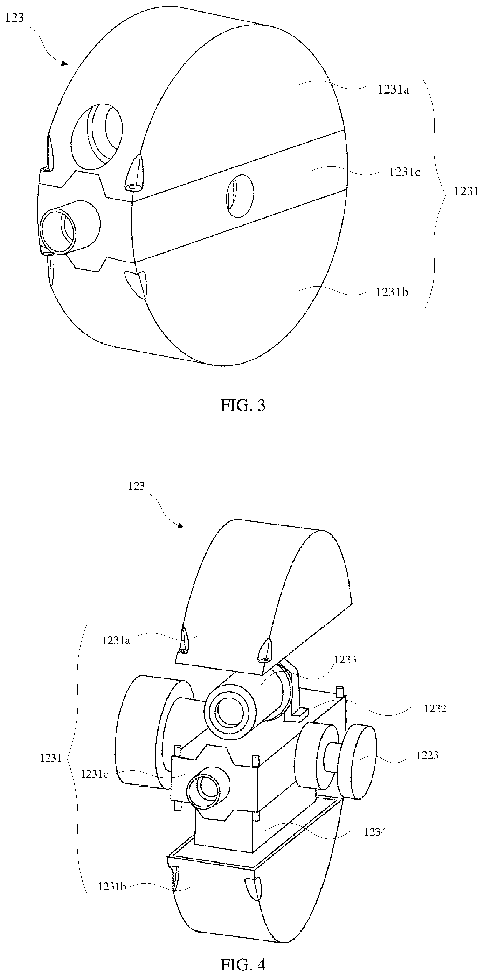

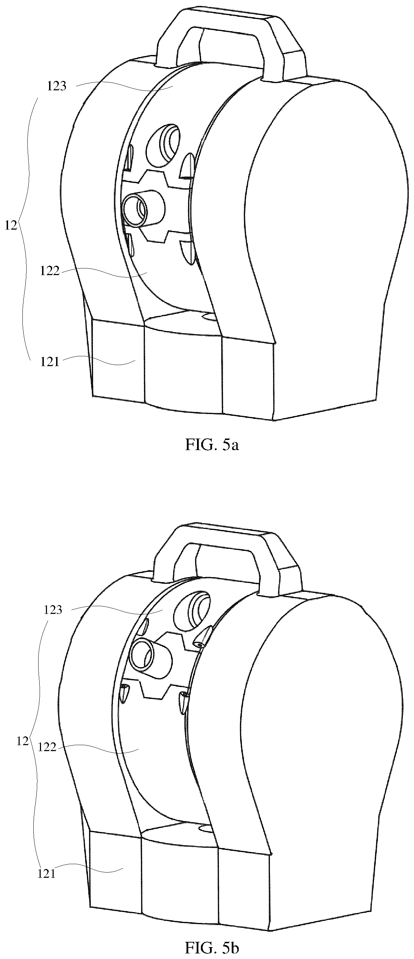

Fig. 2 is an overall structural view showing a coordinate measuring instrument 1 according to an embodiment of the present invention. Fig. 3 is a schematic view showing an optical body 123 of the coordinate measuring instrument 1 according to an embodiment of the present invention. Fig. 4 is an internal structural view showing an optical body 123 according to an embodiment of the present invention. Fig. 5a and Fig. 5b are schematic views showing the mutual cooperation of an orientation camera 1233 and an optical distance meter according to embodiments of the present invention.

As shown in Fig. 2 and Fig. 5a, in the present embodiment, the coordinate measuring instrument 1 may include a base 11 and an optical mechanism 12.

In some examples, the base 11 may be cylindrical. In this case, the base 11 can have high stability. However, the examples of the present embodiment are not limited thereto, and the base 11 may be in a shape of a circular truncated cone, a shape of a cuboid, or other shapes.

In some examples, the optical mechanism 12 may be disposed on the base 11. In some examples, the optical mechanism 12 may include a first rotating device 121, a second rotating device 122, and an optical body 123.

In some examples, the first rotating device 121 may have a groove. In some examples, the first rotating device 121 may have a first rotating shaft which may have a first axis A. In some examples, the first rotating device 121 may have the first axis A. In some examples, the first rotating device 121 may rotate around the first axis A. In some examples, the first axis A may be disposed in a vertical direction. That is, when the optical body 123 is horizontally placed, the direction in which the first axis A extends may be a vertical direction in which a placing plane is perpendicular to the optical body 123. Specifically, as the coordinate measuring instrument 1 is placed on a horizontal plane, the direction in which the first axis A extends may be the same as a gravity direction of the coordinate measuring instrument 1 or a direction opposite to the gravity direction.

Additionally, in some examples, the first rotating device 121 may have a rotating body that may be mounted on the base 11 via the first rotating shaft. In this case, the optical body 123 can be driven to move by the rotation of the first rotating device 121 so that the optical body 123 can track the target ball 2 in the horizontal direction.

As described above, the optical mechanism 12 may include a second rotating device 122. In some examples, the second rotating device 122 may include a first supporting portion 1221 and a second supporting portion 1222. Thus, the structural rigidity of the coordinate measuring instrument 1 can be improved.

In some examples, a first loading unit may be disposed inside the first supporting portion 1221, and a second loading unit may be disposed inside the second supporting portion 1222. In this case, as forces applied to the first supporting portion 1221 or the second supporting portion 1222 are not uniform, the mechanical stability of the optical body 123 can be improved by a counterweight, and thus, the stability of the coordinate measuring instrument 1 can be improved to improve the measurement accuracy.

Referring to Fig. 2, in some examples, the second rotating device 122 may have a second axis B. In some examples, the direction in which the second axis B extends may be a horizontal direction. Specifically, as the coordinate measuring instrument 1 is placed on a horizontal plane, the direction in which the second axis B extends may be parallel to the horizontal plane.

In some examples, the optical body 123 may be mounted on the second rotating device 122. In this case, the optical body 123 can be driven by the rotation of the second rotating device 122, so that the optical body 123 can track the target ball 2 in the vertical direction.

In some examples, the first axis A may be orthogonal to the second axis B. In this case, the difficulty of reducing a geometrical relationship of a tracker shaft system can be lowered, and calculation can be facilitated.

Referring to Fig. 2 and Fig. 4, in some examples, the second rotating device 122 may also include a second rotating shaft 1223. In some examples, the second rotating shaft 1223 is rotatably disposed between the first supporting portion 1221 and the second supporting portion 1222, and additionally, the second rotating shaft 1223 may rotate around the second axis B. In some examples, the optical body 123 may be mounted on the second rotating shaft 1223. Thus, the optical body 123 is capable of rotating around the second axis B based on the second rotating shaft 1223.

In some examples, the first supporting portion 1221 may have a first bearing. In some examples, the second supporting portion 1222 may have a second bearing. In some examples, the axis of the first bearing may coincide with the axis of the second bearing. Thus, the second rotating shaft 1223 can be fixed by the first bearing and the second bearing.

In some examples, the second rotating shaft 1223 may be mounted on the second rotating device 122 via the first bearing and the second bearing. Thus, the second rotating shaft 1223 can be mounted on the second rotating device 122 via the bearings. In addition, by providing the first bearing and the second bearing, a rolling friction force formed between the second rotating device 122 and the second rotating shaft 1223 is small during the rotation of the second rotating shaft 1223. Thus, the abrasion of the second rotating shaft 1223 when rotating can be reduced.

In some examples, the second rotating shaft 1223 may be provided with a precision side baffle. In some examples, the precision side baffle may jump relative to the second rotating shaft 1223. In some examples, the flatness of the precision side baffle may be less than 2 µm. Thus, a shaft system formed by the optical body 123 and the second rotating shaft 1223 can be positioned with high accuracy, and the accuracy of the coordinate measuring instrument 1 can be improved.

Referring to Fig. 2, in some examples, the second rotating device 122 may also include a grip portion 1235. In some examples, the grip portion 1235 may have a first end portion and a second end portion. In some examples, the grip portion 1235 may be connected to the first supporting portion 1221 by the first end portion and may be connected to the second supporting portion 1222 by the second end portion. In this case, when the coordinate measuring instrument 1 is used, the coordinate measuring instrument 1 can be carried on by the grip portion 1235 to adapt to a scene in which the coordinate measuring instrument 1 needs to be carried. Additionally, in this case, the rigidity of the coordinate measuring instrument 1 can be improved as well.

In some examples, the grip portion 1235 may be textured. Thus, the frictional force on the surface of the grip portion 1235 can be increased to facilitate carrying. In some examples, the grip portion 1235 may be of a bridge type. In this case, the gripping can be facilitated.

Referring to Fig. 3, in the present embodiment, the optical body 123 may include a housing 1231 and a laser source. In this case, laser beams are emitted from the laser source, and then, the laser beams are reflected back to the optical body 123 via the target ball 2. The reflected laser beams are subjected to information processing, and the relevant information returned, such as the change of the beams, is calculated by a computer, so that a distance can be measured.

In some examples, the laser source may be disposed inside the housing 1231 and emit laser beams. In some examples, since laser beam is little in divergence and high in distance measurement accuracy, higher measurement accuracy can be obtained by using the laser source to emit laser beams and then perform measurement.

In some examples, the housing 1231 may also be provided with a window. In some examples, a laser beam emitted by the laser source may pass through the window. Thus, the distance from the coordinate measuring instrument 1 to the target ball 2 can be measured by using the window.

In some examples, the housing 1231 of the optical body 123 may be a sealing structure. In this case, the housing 1231 can protect devices inside. Thus, adverse effects of airborne dust on the optical path devices inside the housing are reduced, for example, the efficiency of optical-to-electrical signal conversion is reduced.

In some examples, the housing 1231 may be made of a low-strength flexible material. However, examples of the present embodiment are not limited thereto, and in other examples, the housing 1231 of the optical body 123 may be made of low-hardness plastic. As shown in Fig. 3, in some examples, the housing 1231 may also include a first housing 1231a, a second housing 1231b, and a functional housing 1231c. In some examples, the functional housing 1231c may be disposed between the first housing 1231a and the second housing 1231b. Thus, the structural stability between the respective housings of the housing 1231 can be enhanced.

In some examples, the first housing 1231a and the functional housing 1231c of the optical body 123 may be connected by a connecting column, and the second housing 1231b and the functional housing 1231c of the optical body 123 may be connected by a connecting column. In some examples, the connection of the connecting columns may be flexible connection. In some examples, the number of the connecting columns may be four. In this case, adverse effects on an optical path device due to the forced deformation of the optical body 123 can be reduced. However, examples of the embodiment are not limited thereto, and in some examples, the first housing 1231a and the functional housing 1231c or the second housing 1231b and the functional housing 1231c may be fixedly connected by using bolts.

Referring to Fig. 3 and Fig. 4, in some examples, the first housing 1231a may be provided with an opening. In some examples, the opening may be matched with a lens of an orientation camera 1233 (described later) disposed in the optical body 123. Thus, the orientation of the target ball 2 can be photographed by using the opening.

In some examples, the optical body 123 may also include a beam tracker and an optical distance meter. Thus, real-time tracking for the laser beam can be achieved by means of the beam tracker and the optical distance meter.

In some examples, the beam tracker may capture the laser beam reflected by the target ball 2 to track the laser beam. In some examples, specifically, the beam tracker may be a position sensitive detector (PSD). In this case, the beam reflected by the target can be received by the position sensitive detector, and thus, the position where a beam deviates from a target' center can be determined.

In some examples, the optical distance meter may measure the distance from the target ball 2. In some examples, the optical distance meter may include an absolute distance measuring unit 1234 and an interferometric distance measuring unit 1232. In this case, high-precision data can be obtained by distance measurement performed by using the absolute distance measuring unit 1234 and the interferometric distance measuring unit 1232 when the optical distance meter is used to perform measurement.

In some examples, the absolute distance measuring unit 1234 and the interferometric distance measuring unit 1232 may be disposed inside the optical body 123. Specifically, as shown in Fig. 4, the interferometric distance measuring unit 1232 may be housed in the functional housing 1231c, and the absolute distance measuring unit 1234 may be housed in the second housing 1231b. In this case, with respect to the case that the absolute distance measuring unit 1234 and the interferometric distance measuring unit 1232 are disposed on two sides of the outside of the optical body 123, the volume of the first supporting portion 1221 or the second supporting portion 1222 can be reduced, and problems such as carrying on difficulty, wiring complexity, and large space occupation due to the large volume of the first supporting portion 1221 or the second supporting portion 1222 can be solved, and meanwhile, the inner space of the optical body 123 can be fully utilized.

In some examples, the absolute distance measuring unit 1234 and the interferometric distance measuring unit 1232 may measure the distance through the window. Thus, the absolute distance measuring unit 1234 and the interferometric distance measuring unit 1232 can simultaneously point to the target ball 2 to perform distance measurement.

As described above, in some examples, the optical body 123 may also include an orientation camera 1233. In some examples, the orientation camera 1233 may be housed in the first housing 1231a. In some examples, the orientation camera 1233 may be fixedly connected to the functional housing 1231c. Thus, the stability of the orientation camera 1233 can be improved. Further, in this case, the structural rigidity of the orientation camera 1233 and the functional housing 1231c can also be improved.

In some examples, the orientation camera 1233 may be a wide-angle camera. In this case, a picture obtained by wide-angle photographing can have a strong sense of space. In some examples, since there is slight deformation around the picture photographed by wide-angle lenses, a photographing subject can be better highlighted by the deformation. Thus, the target object that needs to be photographed can be well highlighted.

In some examples, the orientation camera 1233 may have a fixed lens group, a zoom lens group, and a compensating lens group. In this case, the orientation camera 1233 can more clearly capture the movement orientation of the target ball 2 by the mutual cooperation among the respective lens groups.

In some examples, the absolute distance measuring unit 1234, the interferometric distance measuring unit 1232, and the orientation camera 1233 may be located on the same base. In this case, the positioning accuracy can be controlled to reduce measurement errors, and thus, the measurement accuracy can be improved.

As described above, the absolute distance measuring unit 1234, the interferometric distance measuring unit 1232, and the orientation camera 1233 may share one base. In some examples, the material used for the base may be aluminum alloy A7075. In some examples, the aluminum alloy A7075 that has been subjected to heat treatment and artificially aged to remove internal stresses can achieve the strength of steel. In this case, the use of the aluminum alloy A7075 as the base can increase the rigidity of a system structure, so that it is not easily deformed.

In some examples, the orientation camera 1233 may rotate with the second rotating shaft 1223 around the second axis B. In this case, when the orientation camera 1233 rotates around the second rotating shaft 1223, since the orientation camera 1233 and the optical distance meter may have a consistent rotation direction, the high accuracy can be ensured, and thus, the spatial position coordinates and the orientation of an object such as the target ball 2 are measured more accurately.

In some examples, the coordinate measuring instrument 1 may also include a control mechanism (not shown). In some examples, the control mechanism may include motors. In this case, the first rotating device 121 and the second rotating device 122 can be driven to move by the motors. Specifically, when the beam tracker tracks the target ball 2, the control mechanism may drive the first rotating device 121 and the second rotating device 122 to rotate. In this case, the orientation camera 1233 and the optical distance meter can track the target ball 2.

As shown in Fig. 5a and Fig. 5b, when it is detected by the optical body 123 of the coordinate measuring instrument 1 that the target ball 2 is located above, the control mechanism may drive the orientation camera 1233 and the optical distance meter to rotate towards the position of the target ball 2 so that the coordinate measuring instrument 1 tracks the target ball 2. In this embodiment, the orientation camera 1233 and the optical distance meter rotate at the same rotation speed and in the same rotation direction.

In some examples, the first rotating device 121 may have a groove, which will be correspondingly described later. In this case, the range of motion of the second rotating device 122 can be widened, and the measurement angle of lenses can be enlarged.

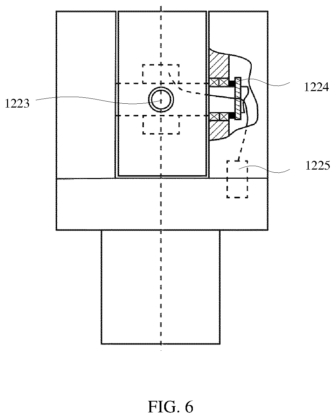

Fig. 6 is a layout view showing an optical fiber unit of a coordinate measuring instrument 1 according to an embodiment of the present invention.

As shown in Fig. 6, the internal space of the second rotating shaft 1223 may be set to be hollow. That is, the second rotating shaft 1223 may have an internal cavity. In this case, if a plurality of through holes are provided in the second rotating shaft 1223, various lines such as optical fibers can communicate with each through hole of the plurality of through holes.

In the present embodiment, the second rotating shaft 1223 may be provided with a first through hole and a second through hole (not shown). In some examples, an opening direction of the first through hole is consistent with the direction in which the second axis B extends, and the second through hole is formed in a side wall of the second rotating shaft 1223. In some examples, the first through hole may be disposed in the second rotating device 122, and the second through hole may be disposed inside the optical body 123. Thus, the second rotating device 122 may communicate with the optical body 123 via the first through hole and the second through hole.

In some examples, the second rotating device 122 may include an angle encoder 1224. In some examples, the angle encoder 1224 may be of annular shape. Specifically, the angle encoder 1224 may be in the shape of a circular ring. In some examples, the angle encoder 1224 may be disposed on the side close to the first supporting portion 1221 of the first bearing. In some examples, the angle encoder 1224 may also be disposed on the side close to the second supporting portion 1222 of the second bearing. In this case, the spatial position coordinates of the target can be calculated by measurement performed by the angle encoder 1224 of the angular variation of a beam in combination with the distance measurement performed by the optical distance meter.

In some examples, the optical mechanism 12 may also have an optical fiber unit. In this case, the output directional stability of laser beams can be improved by using an optical fiber as a carrier of the laser beams. Further, in this case, drift errors caused by spatial conduction of the laser beams can be reduced.

In some examples, one end of the optical fiber unit may enter the second rotating device 122 via a first through hole. The other end of the optical fiber unit may enter the optical body 123 via the second through hole. In this case, by allowing the optical fiber unit to enter the second rotating device 122 and the optical body 123 via the first through hole and the second through hole, respectively, the spatial accumulation of lines inside the optical mechanism 12 can be reduced, and thus, the utilization ratio of the inner space of the optical mechanism 12 can be increased.

In some examples, the second rotating device 122 may include an optical fiber supporting portion 1225. In some examples, the optical fiber supporting portion 1225 may be used to support the optical fiber unit. Thus, the optical fiber unit can be fixed by the optical fiber supporting portion 1225.

In some examples, the coordinate measuring instrument 1 may also include a stand (not shown). In some examples, the base 11 is disposed on the stand. In some examples, the stand may be a heavy-duty tripod. Thus, the base 11 can be stabilized relatively well.

However, the present embodiment is not limited thereto, and in other examples, the stand may also be a lightweight tripod or a portable fixed chassis. Thus, a different stand may be selected to place the coordinate measuring instrument 1 according to different usage scenarios. Specifically, when the coordinate measuring instrument 1 is inconvenient to carry, the lightweight tripod may be selected as the chassis.

In some examples, the stand may be configured to have a function of automatically correcting a horizontal state of a system in the gravity direction. In this case, when the coordinate measuring instrument 1 is used for measurement, if the coordinate measuring instrument 1 is not horizontal, the coordinate measuring instrument 1 can be automatically adjusted by an automatic correction system so as to return to the horizontal state.

In some examples, the stand may also be configured with a mobile power supply. In this case, when the coordinate measuring instrument 1 is supplied with insufficient power, the mobile power supply can charge the coordinate measuring instrument 1.

Various embodiments of the present invention have been described above in the detailed description. Although the above embodiments are directly described in these descriptions, it should be understood that modifications and/or variations to the specific embodiments shown and described herein may occur to those skilled in the art. Any such modifications or variations that fall within the scope of this specification are also intended to be included therein. Unless specifically stated, it is the intention of the inventors that the words and phrases in the specification and claims are given the ordinary and accustomed meanings of those of the ordinary skill in the art.

The foregoing descriptions for various embodiments of the present invention known to the applicant at the time of filing this application have been presented and are intended for purposes of illustration and description. It is not intended to be exhaustive or to limit the present invention to the precise form disclosed, and many modifications and variations are possible in light of the above teaching. The described embodiments are presented to explain the principles of the present invention and its practical applications and to enable others skilled in the art to utilize the present invention in various embodiments and with various modifications as are suited to the particular use contemplated. Therefore, it is intended that the present invention is not limited to the particular embodiments disclosed for carrying out the present invention.

The scope of the invention is defined by the appended claims. It will be understood by those skilled in the art that, in general, terms used in the present invention are generally intended to be "open" terms (e.g. the term "including" should be interpreted as "including, but not limited to", the term "having" should be interpreted as "having at least", the term "including" should be interpreted as "including, but not limited to", etc.).

## Claims

1. A coordinate measuring instrument (1) which measures an auxiliary measuring device by tracking the auxiliary measuring device, in which the coordinate measuring instrument comprises: a base (11) and an optical mechanism (12) disposed on the base (11);
the optical mechanism (12) comprises a first rotating device (121) mounted on the base (11) and rotatable relative to the base (11) around a first axis, a second rotating device (122) having a second axis and disposed on the first rotating device (121), and an optical body (123) mounted on the second rotating device (122) and rotatable relative to the first rotating device (121) around the second axis, and the first axis is orthogonal to the second axis; the optical body (123) has a housing (1231), a laser source disposed in the housing (1231) and emitting laser beams, a beam tracker for capturing the laser beams reflected by the auxiliary measuring device to track the laser beams, the reflected laser beams are used for information processing to measure a distance, and an optical distance meter for measuring a distance from the auxiliary measuring device; the housing comprises a first housing (1231a), a second housing (1231b), and a functional housing (1231c) disposed between the first housing (1231a) and the second housing (1231b), the first housing (1231a) and the functional housing (1231c) are connected by a flexible connecting column, and the second housing (1231b) and the functional housing (1231c) are connected by a flexible connecting column; and the optical distance meter comprises an interferometric distance measuring unit (1232) and an absolute distance measuring unit (1234) which are disposed inside the optical body, the interferometric distance measuring unit (1232) is housed in the functional housing (1231c), and the absolute distance measuring unit (1234) is housed in the second housing (1231b).

2. The coordinate measuring instrument according to claim 1, **characterized in that**:
the first rotating device has a groove, a first rotating shaft capable of rotating along the first axis disposed in a vertical direction, and a rotating body mounted on the base via the first rotating shaft.

3. The coordinate measuring instrument according to claim 2, **characterized in that**:
the second rotating device comprises a first supporting portion, a second supporting portion, a second rotating shaft rotatably disposed between the first supporting portion and the second supporting portion, and a grip portion.

4. The coordinate measuring instrument according to claim 3, **characterized in that**:
the optical body also comprises an orientation camera configured to rotate with the second rotating shaft around the second axis.

5. The coordinate measuring instrument according to claim 1, **characterized in that**:
The instrument comprises a control mechanism for driving the optical body to rotate.

6. The coordinate measuring instrument according to claim 1, **characterized in that**: the housing is a sealing structure.

7. The coordinate measuring instrument according to claim 3, **characterized in that**:
the second rotating device comprises a first bearing disposed on the first supporting portion and a second bearing disposed on the second supporting portion, the second rotating shaft is mounted on the second rotating device via the first bearing and the second bearing, and an angle encoder in the shape of a circular ring is disposed on the side close to the first supporting portion of the first bearing or on the side close to the second supporting portion of the second bearing.

8. The coordinate measuring instrument according to claim 3, **characterized in that**:
the second rotating shaft has a first through hole in the direction of the second axis and a second through hole formed in a side wall of the second rotating shaft and communicating with the first through hole, and the second rotating shaft communicates with the second rotating device and the optical body via the first through hole and the second through hole.

9. The coordinate measuring instrument according to claim 8, **characterized in that**:
the optical mechanism has an optical fiber unit disposed inside the second rotating device and the optical body via the first through hole and the second through hole respectively, one end of the optical fiber unit enters the second rotating device via the first through hole, and the other end of the optical fiber unit enters the optical body via the second through hole.

10. The coordinate measuring instrument according to claim 9, **characterized in that**:
the second rotating device comprises an optical fiber supporting portion for supporting the optical fiber unit.

## Patentansprüche

1. Koordinatenmessgerät (1), das eine Hilfsmessvorrichtung misst, indem es die Hilfsmessvorrichtung verfolgt, wobei das Koordinatenmessgerät Folgendes umfasst:
einen Sockel (11) und einen auf dem Sockel (11) angeordneten optischen Mechanismus (12);
der optische Mechanismus (12) umfasst eine erste Drehvorrichtung (121), die auf dem Sockel (11) montiert und relativ zu diesem Sockel (11) um eine erste Achse drehbar ist, eine zweite Drehvorrichtung (122) mit einer zweiten Achse, die auf der ersten Drehvorrichtung (121) angeordnet ist, und einen optischen Körper (123), der auf der zweiten Drehvorrichtung (122) montiert und relativ zur ersten Drehvorrichtung (121) um die zweite Achse drehbar ist, wobei die erste Achse orthogonal zur zweiten Achse verläuft; der optische Körper (123) umfasst ein Gehäuse (1231), eine in dem Gehäuse (1231) angeordnete Laserquelle, die Laserstrahlen aussendet, einen Strahlverfolger zum Erfassen der von der Hilfsmesseinrichtung reflektierten Laserstrahlen und zur Verfolgung der Laserstrahlen, wobei die reflektierten Laserstrahlen zur Informationsverarbeitung verwendet werden, um eine Entfernung zu messen, und einen optischen Entfernungsmesser zum Messen einer Entfernung von der Hilfsmesseinrichtung; das Gehäuse umfasst ein erstes Gehäuse (1231a), ein zweites Gehäuse (1231b) und ein Funktionsgehäuse (1231c), das zwischen dem ersten Gehäuse (1231a) und dem zweiten Gehäuse (1231b) angeordnet ist, das erste Gehäuse (1231a) und das Funktionsgehäuse (1231c) sind durch eine flexible Verbindungssäule verbunden, und das zweite Gehäuse (1231b) und das Funktionsgehäuse (1231c) sind durch eine flexible Verbindungssäule verbunden; und der optische Entfernungsmesser umfasst eine interferometrische Entfernungsmesseinheit (1232) und eine absolute Entfernungsmesseinheit (1234), die im Inneren des optischen Körpers angeordnet sind, wobei die interferometrische Entfernungsmesseinheit (1232) in dem Funktionsgehäuse (1231c) aufgenommen ist,
und die absolute Entfernungsmesseinheit (1234) im zweiten Gehäuse (1231b) aufgenommen ist.

2. Koordinatenmessgerät nach Anspruch 1, **dadurch gekennzeichnet, dass**:
die erste Drehvorrichtung eine Nut, eine erste, um die erste, vertikal angeordnete Achse drehbare Drehwelle und einen mittels der ersten Drehwelle auf dem Sockel montierten Drehkörper aufweist.

3. Koordinatenmessgerät nach Anspruch 2, **dadurch gekennzeichnet, dass**:
die zweite Drehvorrichtung einen ersten Stützabschnitt, einen zweiten Stützabschnitt, eine zwischen dem ersten Stützabschnitt und dem zweiten Stützabschnitt drehbar angeordnete zweite Drehwelle sowie einen Griffabschnitt umfasst.

4. Koordinatenmessgerät nach Anspruch 3, **dadurch gekennzeichnet, dass**:
der optische Körper weiterhin eine Orientierungskamera umfasst, die so konfiguriert ist, dass sie sich mit der zweiten Drehwelle um die zweite Achse dreht.

5. Koordinatenmessgerät nach Anspruch 1, **dadurch gekennzeichnet, dass**:
das Gerät einen Steuermechanismus zum Antreiben der Drehung des optischen Körpers umfasst.

6. Koordinatenmessgerät nach Anspruch 1, **dadurch gekennzeichnet, dass**:
das Gehäuse eine Dichtungsstruktur bildet.

7. Koordinatenmessgerät nach Anspruch 3, **dadurch gekennzeichnet, dass**:
die zweite Drehvorrichtung ein erstes, auf dem ersten Stützabschnitt angeordnetes Lager und ein zweites, auf dem zweiten Stützabschnitt angeordnetes Lager umfasst, die zweite Drehwelle über das erste Lager und das zweite Lager an der zweiten Drehvorrichtung angebracht ist und ein Winkelgeber in Form eines Kreisrings auf der dem ersten Stützabschnitt nahen Seite des ersten Lagers oder auf der dem zweiten Stützabschnitt nahen Seite des zweiten Lagers angeordnet ist.

8. Koordinatenmessgerät nach Anspruch 3, **dadurch gekennzeichnet, dass**:
die zweite Drehwelle eine erste Durchgangsbohrung in Richtung der zweiten Achse und eine zweite Durchgangsbohrung in einer Seitenwand der zweiten Drehwelle aufweist, die mit der ersten Durchgangsbohrung in Verbindung steht, und die zweite Drehwelle über die erste Durchgangsbohrung und die zweite Durchgangsbohrung mit der zweiten Drehvorrichtung und dem optischen Körper in Verbindung steht.

9. Koordinatenmessgerät nach Anspruch 8, **dadurch gekennzeichnet, dass**:
der optische Mechanismus eine optische Fasereinheit hat, die jeweils über die erste und die zweite Durchgangsbohrung im Inneren der zweiten Drehvorrichtung und des optischen Körpers angeordnet ist, wobei ein Ende der optischen Fasereinheit über die erste Durchgangsbohrung in die zweite Drehvorrichtung eingeführt ist und das andere Ende der optischen Fasereinheit über die zweite Durchgangsbohrung in den optischen Körper eingeführt ist.

10. Koordinatenmessgerät nach Anspruch 9, **dadurch gekennzeichnet, dass**:
die zweite Drehvorrichtung einen optischen Faserhalterungsabschnitt zum Tragen der optischen Fasereinheit umfasst.

## Revendications

1. Instrument de mesure de coordonnées (1) qui mesure un dispositif de mesure auxiliaire en suivant le dispositif de mesure auxiliaire, dans lequel l'instrument de mesure de coordonnées comprend :
une base (11) et un mécanisme optique (12) disposé sur la base (11) ;
le mécanisme optique (12) comprend un premier dispositif rotatif (121) monté sur la base (11) et pouvant entrer en rotation par rapport à la base (11) autour d'un premier axe, un second dispositif rotatif (122) ayant un second axe et disposé sur le premier dispositif rotatif (121), et un corps optique (123) monté sur le second dispositif rotatif (122) et pouvant entrer en rotation par rapport au premier dispositif rotatif (121) autour du second axe, et le premier axe est orthogonal au second axe ; le corps optique (123) a un logement (1231), une source laser disposée dans le logement (1231) et émettant des faisceaux laser, un suiveur de faisceau pour capturer les faisceaux laser réfléchis par le dispositif de mesure auxiliaire pour suivre les faisceaux laser, les faisceaux laser réfléchis sont utilisés pour un traitement d'informations pour mesurer une distance, et un télémètre optique pour mesurer une distance à partir du dispositif de mesure auxiliaire ; le logement comprend un premier logement (1231a), un second logement (1231b), et un logement fonctionnel (1231c) disposé entre le premier logement (1231a) et le second logement (1231b), le premier logement (1231a) et le logement fonctionnel (1231c) sont reliés par une colonne de liaison flexible, et le second logement (1231b) et le logement fonctionnel (1231c) sont reliés par une colonne de liaison flexible ; et le télémètre optique comprend une unité de mesure de distance interférométrique (1232) et une unité de mesure de distance absolue (1234) qui sont disposées à l'intérieur du corps optique, l'unité de mesure de distance interférométrique (1232) est logée dans le logement fonctionnel (1231c),
et l'unité de mesure de distance absolue (1234) est logée dans le second logement (1231b).

2. Instrument de mesure de coordonnées selon la revendication 1, **caractérisé en ce que** :
le premier dispositif rotatif a une rainure, un premier arbre rotatif capable d'entrer en rotation le long du premier axe disposé dans une direction verticale, et un corps rotatif monté sur la base par l'intermédiaire du premier arbre rotatif.

3. Instrument de mesure de coordonnées selon la revendication 2, **caractérisé en ce que** :
le second dispositif rotatif comprend une première partie de support, une seconde partie de support, un second arbre rotatif disposé de façon rotative entre la première partie de support et la seconde partie de support, et une partie de préhension.

4. Instrument de mesure de coordonnées selon la revendication 3, **caractérisé en ce que** :
le corps optique comprend également une caméra d'orientation conçue pour entrer en rotation avec le second arbre rotatif autour du second axe.

5. Instrument de mesure de coordonnées selon la revendication 1, **caractérisé en ce que** :
l'instrument comprend un mécanisme de commande pour entraîner la rotation du corps optique.

6. Instrument de mesure de coordonnées selon la revendication 1, **caractérisé en ce que** :
le logement est une structure d'étanchéité.

7. Instrument de mesure de coordonnées selon la revendication 3, **caractérisé en ce que** :
le second dispositif rotatif comprend un premier palier disposé sur la première partie de support et un second palier disposé sur la seconde partie de support, le second arbre rotatif est monté sur le second dispositif rotatif par l'intermédiaire du premier palier et du second palier, et un codeur angulaire en forme d'anneau circulaire est disposé sur le côté proche de la première partie d'appui du premier palier ou sur le côté proche de la seconde partie d'appui du second palier.

8. Instrument de mesure de coordonnées selon la revendication 3, **caractérisé en ce que** :
le second arbre rotatif a un premier trou traversant dans la direction du second axe et un second trou traversant formé dans une paroi latérale du second arbre rotatif et communiquant avec le premier trou traversant, et le second arbre rotatif communique avec le second dispositif rotatif et le corps optique par l'intermédiaire du premier trou traversant et du second trou traversant.

9. Instrument de mesure de coordonnées selon la revendication 8, **caractérisé en ce que** :
le mécanisme optique a une unité de fibre optique disposée à l'intérieur du second dispositif rotatif et du corps optique par l'intermédiaire du premier trou traversant et du second trou traversant respectivement, une extrémité de l'unité de fibre optique entre dans le second dispositif rotatif par l'intermédiaire du premier trou traversant, et l'autre extrémité de l'unité de fibre optique entre dans le corps optique par l'intermédiaire du second trou traversant.

10. Instrument de mesure de coordonnées selon la revendication 9, **caractérisé en ce que** :
le second dispositif rotatif comprend une partie de support de fibre optique pour supporter l'unité de fibre optique.
